# EUROPEAN PATENT SPECIFICATION

(11) **EP 4 225 467 B1**
(45) Date of publication and mention of the grant of the patent: **17.06.2026**
(21) Application number: 21878707.5
(22) Date of filing: 17.09.2021
(51) Int. Cl.: B01D 33/06, B01D 24/00, B01D 24/28, B01D 24/32, B01D 24/36, B01D 24/38, B01D 33/50, B01D 33/067, B01D 33/46, B01D 33/80, C02F 1/00, F16C 17/02, F16C 33/04, F16C 33/06, F16C 33/20

(54) **ROTARY SCREENING DEVICE WITH BEARINGS**
ROTIERENDE SIEBVORRICHTUNG MIT LAGERN
DISPOSITIF DE TAMISAGE ROTATIF À PALIERS

(30) Priority: 07.10.2020 US 202017064926
(43) Date of publication of application: 16.08.2023
(73) Proprietor: DUPERON INNOVATION LLC, Saginaw, MI 48601 (US)
(72) Inventor: Blanchard, Kenneth, Sanford, ML 48640 (US); Dayton, Brandon, Flushing, MI 48433 (US); Duperon, Terry L., Saginaw, MI 48601 (US); Funchion, Bryce, Tecumseh, MI 49286 (US); Henning, Timothy, Kentwood, MI 49548 (US); Turpin, Mark, Bay City, MI 48708 (US)
(74) Representative: Boult Wade Tennant LLP
(86) International application number: PCT/US2021/071496
(87) International publication number: WO 2022/076962

(56) References cited:
- WO-A1-2014/049791
- CN-U- 211 836 494
- KR-B1- 101 246 050
- US-A- 1 950 466
- US-A- 2 014 144
- US-A- 3 223 315
- US-A- 4 198 299
- US-A- 5 593 574
- US-A- 5 894 936
- US-A1- 2003 183 570
- US-A1- 2012 055 887

## Description

### BACKGROUND OF THE INVENTION

This invention deals with rotary screens used in rotary screening devices for cleaning water.

Such rotary screening devices are also known as Trommel screens. Rotary screening devices are mechanical screening machines used to separate materials, mainly in the mineral and solid-waste processing industries. They consist of a perforated cylindrical drum or mesh screen that is normally elevated at an angle at the feed end.

Physical size separation is achieved as the feed material spirals down the rotating drum or screen, sometimes assisted by augers or conveyors, or the like, where the undersized material smaller than the mesh or apertures passes through the screen, while the oversized material exits at the other end of the drum.

In the wastewater treatment industry, the solids that exit the rotary screen normally are compressed and dewatered as they travel along the conveyor or rotary auger. Most often a post-washing treatment such as a jet wash will be used after the rotary screen to break down fecal matter and unwanted semi-solid matter. The volume of the solids will decrease up to 40% depending on the properties before removal.

Rotary screens come in many designs such as concentric screens, series or parallel arrangement and each component has a few configurations. Rotary screening devices are used by the municipal waste industry in the screening process to classify sizes of solid waste. In addition, rotary screening devices are used for the treatment of water. For this particular application, solids from the entering stream will settle onto the screen mesh and the drum will rotate once the liquid reaches a certain level. The clean area of the screen is submerged into the liquid while the trapped solids fall onto a conveyor or auger which is further processed before removal.

US5894936A describes a drum separator for separating brine shrimp eggs from a slurry containing brine shrimp eggs and debris which includes a fluid source to maintain a slurry. The fluid source may be an internal spray jet disposed to spray against the slurry inside the drum so that the brine shrimp eggs may pass through openings formed in the drum. An external spray jet is disposed to spray against the exterior surface of the drum for cleaning the debris out of the openings in the drum.

US4198299A describes drop-back of solids into the drum pool of a rotary microscreen which is reduced by applying a limited gas pressure differential across an unsubmerged portion of the screen cloth.

KR101246050B1 describes a drum screening apparatus which comprises a rotary drum part, a driving part, an adulteration elimination part, and a filtered water discharge part. The adulteration elimination part separates, collects and discharges micro adulteration on a drum screen by spraying washing water from a washer nozzle.

US1950466A describes a method and apparatus including a fine filter supported between two perforated cylinders and revolved in the path of fluid flow, the filter being automatically cleaned by backwashing the solids with a counterflow of fluid continuously operating upon a changing small area of the filter.

US5593574A describes a water treatment system and more particularly to a fish tank and biofilter for use in a fish aquaculture. Clarified water is withdrawn from the center of the fish tank through a manifold having an outlet above the well and conducted to a spray bar of a separate biofilter apparatus. The biofilter includes a rotating spray bar distributing water over a bed of floating media pellets.

US3223315A describes a centrifugal separating device which operates to separate constituents of different densities from a fluid stream which passes through the device, and more particularly it relates to a centrifugal separator wherein the means which provides power to operate the separator forms an integral portion of the separator itself.

### THE INVENTION

There is provided a rotary screening device according to claim 1.

This invention deals with rotary screens used in rotary screening devices for cleaning water in which the prior art trunnion wheels on current state of the art rotary screening devices are substituted by a rocker shoe and a bearing running on the rocker shoe.

Thus, what is disclosed in this specification and claims is a rotary screening device for cleaning water. The rotary screening device comprises a housing, wherein the housing contains a rotary screen. The rotary screen provides separation of particulate solid matter from water.

The rotary screen is powered at a first end by a motor and gear box, while the second end rotates on a rocker shoe. The second end outside surface supports a bearing, wherein the bearing is lubricated by water. The bearing contacts the rocker shoe.

There is a system for delivering water to the bearing while the bearing is in use. The rotary screen further comprises a spray bar for providing cleaning water to the outside surface of the rotary screen.

There is a water system for delivering water to the spray bar and an inlet for supplying and distributing uncleaned water to the interior of the rotary screen. There is a water exit from the housing and a solids outlet from the rotary screen.

### BRIEF DESCRIPTION OF THE DRAWINGS

Figure 1 is a segment end view of a prior art rotary screening device showing the prior art trunnion wheel on one end of the rotary screening device.
Figure 2 is a full side view of one version of the instant invention, a rotary screening device with a bearing.
Figure 3 is a cross-sectional of the device of Figure 2 through line A-A of Figure 2.
Figure 4 is a segment view of the bearing and rocker arm of the instant invention.
Figure 5 is a segment of the bearing showing the spray lubrication.

### DETAILED DESCRIPTION OF THE INVENTION

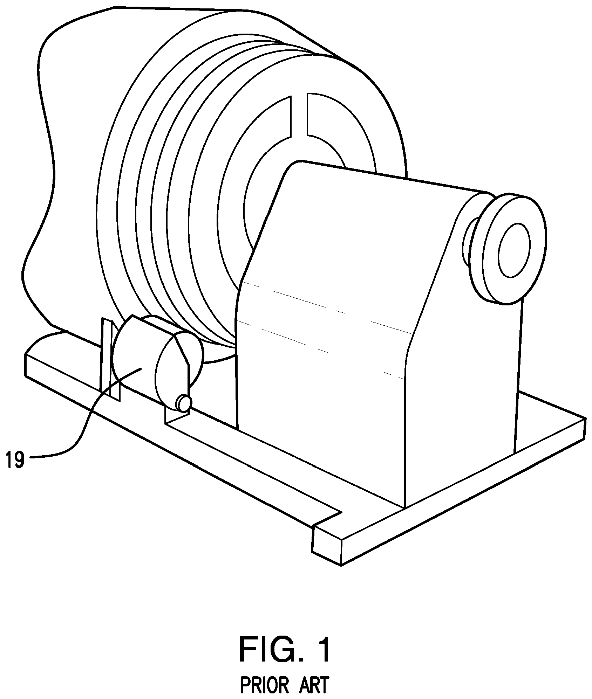

Figure 1 is a segmental view of a prior art rotary screen device in which there is shown the use of trunnion rollers 19. This is shown to indicate the prior art use of such devices in comparison to the instant invention in which the trunnion rollers 19 have been replaced by a rocker shoe and a bearing (described in detail *infra*)*.*

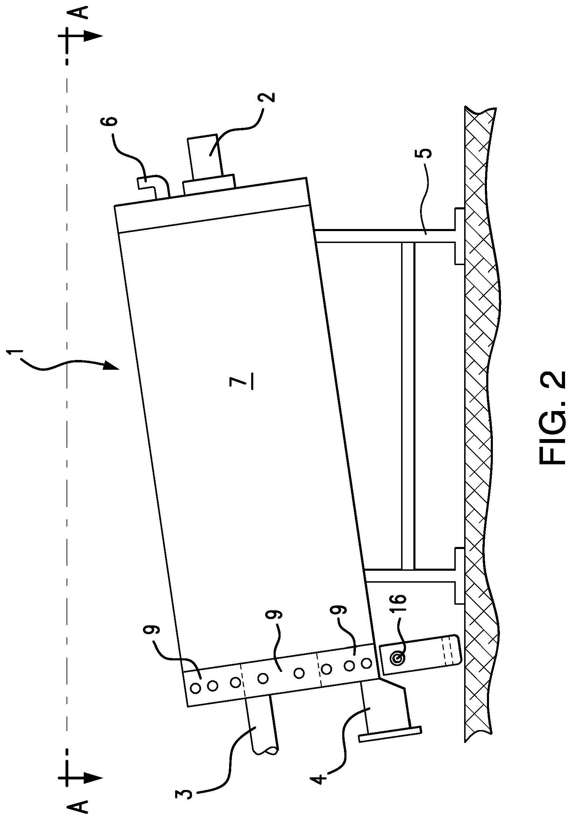

Turning to Figure 2, there is shown a device of this invention which is a rotary screen device 1. It is equipped with a motor and gear box 2, an inlet 3 for the aqueous material to be treated, an outlet 4 for the solids removed from the aqueous media, a support stand 5 for supporting the rotary screen device 1, a clean water inlet 6, a housing 7, and at the lower end of the housing 7 there is shown bearings 9, on the outside surface of the housing 7 and a rocker shoe 10 with a bearing 11 (shown in phantom) near the bottom edge 12 thereof.

It is contemplated with the scope of this invention to manufacture the device 1 such that the inlet 6 is on the opposite end of the housing 7.

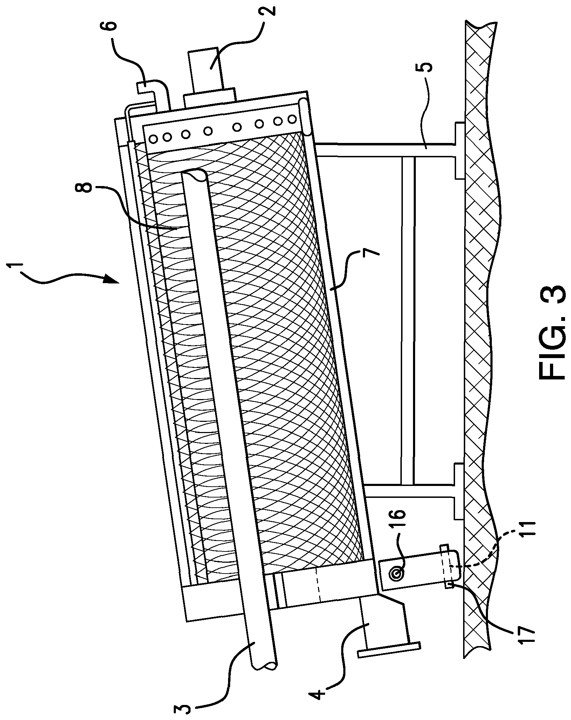

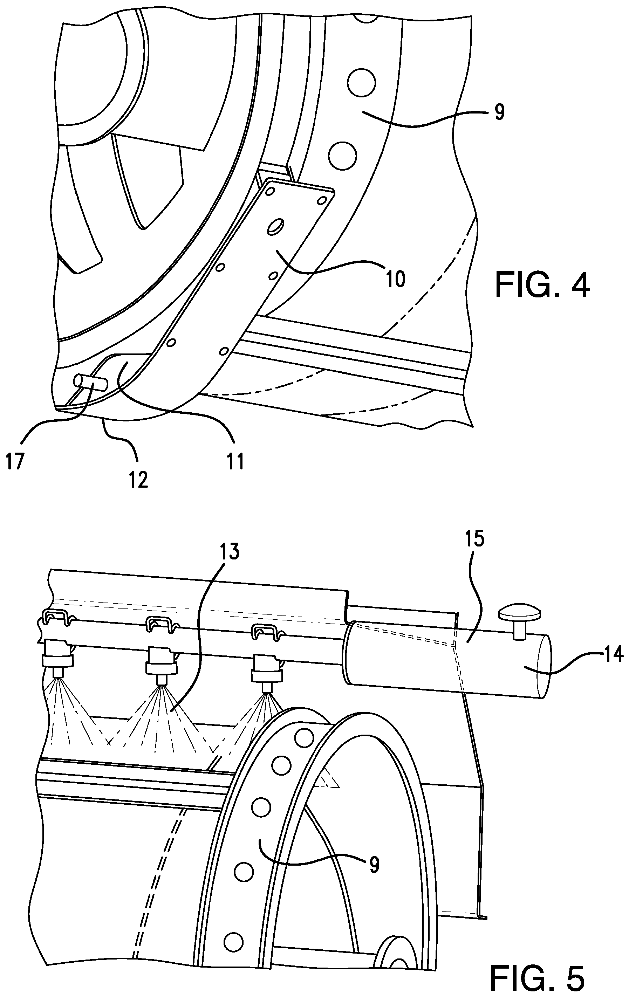

Figure 3 is a cross sectional view through line A-A of Figure 1, showing the additional components of the device 1. There is shown a motor and gear box 2, an inlet 3 for the aqueous material to be treated, an outlet 4 for the solids removed from the aqueous media, a support stand 5 for supporting the rotary screen device 1, a clean water inlet 6, and a housing 7. Also shown is the rotary screen 8 and the rocker shoe 10 along with the bearing 11 near the bottom edge 12 thereof (shown in phantom). The drawings show a narrow gap between the bearing 9 and the rocker shoe 10 for clarity purposes. In working order, the surface of the bearing 9 rides on the inside surface of the rocker shoe 10. See also Figure 4.

The bearing on the rotary screen can be manufactured from plastics, metal, such as stainless steel, ceramics, and the like.

Any plastic used in the plastic bearing can be such materials as Thordon or Vesconite brand bearing materials available from Thordon Bearings Inc. Burlington, Ontario, Canada, ultra-high molecular weight polyethylene, high density polyethylene or c ross-linked polyethylene.

There is a plurality of sprayers 13 located above the roller screen 8 to cleanse the roller screen. Water for this purpose is introduced at the freshwater inlet 14. The detail in the sprayers 14 is shown in Figure 5, wherein there is shown the sprayers 14, the freshwater inlet tube 15, the roller screen 8, and the bearing 9. Shown in Figure 5 is the furnishing of water to the bearing 9, but the bearing 9 is also furnished water as a lubricant at the inlet port 16 shown in Figure 2.

Figure 4 is a detail of the rocker shoe 10 and the bearing 10 along with the bearing 11 and a steel pin 17 to support the bearing 11.

It should be noted that the exact placement of the various components on the rotary screen device is not critical except for the placement of the rocker shoe and the bearing.

## Claims

1. A rotary screening device (1) for cleaning water, said rotary screening device (1) comprising:
a. a housing (7), said housing (7) containing,
b. a rotary screen (8), said rotary screen (8) providing separation of particulate solid matter from water;
c. said rotary screen (8) powered at a first end by a motor (2), said second end rotating on a rocker shoe (10), said second end outside surface supporting a bearing (9), said bearing (9) being lubricated by water and contacting said rocker shoe (10);
d. a system (16) for delivering said water to said bearing (9) while said bearing (9) is in use;
e. said rotary screen (8) further comprising a spray bar (13) for providing cleaning water to the outside surface of said rotary screen (8);
f. a water system for delivering water to said spray bar;
g. an inlet (3) for supplying and distributing uncleaned water to the interior of said rotary screen (8);
h. a water exit from said housing (7);
i. a solids outlet (4) from said rotary screen (8).

2. A rotary screening device (1) for cleaning water as claimed in claim 1 wherein the rotary screen bearing (9) is manufactured from plastic.

3. A rotary screening device (1) for cleaning water as claimed in claim 1 wherein the rotary screen bearing (9) is manufactured from ceramic.

4. A rotary screening device (1) for cleaning water as claimed in claim 1 wherein the rotary screen bearing (9) is manufactured from metal.

5. A rotary screening device (1) for cleaning water as claimed in claim 4, wherein the metal is stainless steel.

## Patentansprüche

1. Rotierende Siebvorrichtung (1) zur Wasserreinigung, wobei die rotierende Siebvorrichtung (1) Folgendes umfasst:
a. ein Gehäuse (7), wobei das Gehäuse (7) enthält,
b. ein Rotationssieb (8), wobei das Rotationssieb (8) die Trennung von festen Partikeln aus Wasser bereitstellt;
c. das Rotationssieb (8), das an einem ersten Ende von einem Motor (2) angetrieben wird, wobei sich das zweite Ende auf einem Kippschuh (10) dreht und die Außenfläche des zweiten Endes ein Lager (9) trägt, wobei das Lager (9) mit Wasser geschmiert wird und mit dem Kippschuh (10) in Kontakt steht;
d. ein System (16) zur Zufuhr des Wassers zu dem Lager (9), während das Lager (9) in Betrieb ist;
e. wobei das Rotationssieb (8) ferner einen Sprühbalken (13) zur Bereitstellung von Reinigungswasser auf die Außenfläche des Rotationssiebs (8) umfasst;
f. ein Wassersystem zur Zufuhr von Wasser zu dem Sprühbalken;
g. einen Einlass (3) zur Zufuhr und Verteilung von ungereinigtem Wasser in das Innere des Rotationssiebs (8);
h. einen Wasseraustritt aus dem Gehäuse (7);
i. einen Feststoffauslass (4) von dem Rotationssieb (8).

2. Rotierende Siebvorrichtung (1) zur Wasserreinigung nach Anspruch 1, wobei das Lager (9) des Rotationssiebs aus Kunststoff gefertigt ist.

3. Rotierende Siebvorrichtung (1) zur Wasserreinigung nach Anspruch 1, wobei das Lager (9) des Rotationssiebs aus Keramik gefertigt ist.

4. Rotierende Siebvorrichtung (1) zur Wasserreinigung nach Anspruch 1, wobei das Lager (9) des Rotationssiebs aus Metall gefertigt ist.

5. Rotierende Siebvorrichtung (1) zur Wasserreinigung nach Anspruch 4, wobei das Metall Edelstahl ist.

## Revendications

1. Dispositif de tamisage rotatif (1) pour le nettoyage de l'eau, ledit dispositif de tamisage rotatif (1) comprenant :
a. un boîtier (7), ledit boîtier (7) contenant,
b. un tamis rotatif (8), ledit tamis rotatif (8) fournissant une séparation de matières solides particulaires de l'eau ;
c. ledit tamis rotatif (8) alimenté au niveau d'une première extrémité par un moteur (2), ladite seconde extrémité tournant sur un patin à bascule (10), ladite seconde surface extérieure d'extrémité supportant un palier (9), ledit palier (9) étant lubrifié par l'eau et en contact avec ledit patin à bascule (10) ;
d. un système (16) pour acheminer ladite eau vers ledit palier (9) pendant que ledit palier (9) est en service ;
e. ledit tamis rotatif (8) comprenant en outre une barre de pulvérisation (13) pour fournir de l'eau de nettoyage à la surface extérieure dudit tamis rotatif (8) ;
f. un système d'alimentation en eau pour alimenter en eau ladite barre de pulvérisation ;
g. une entrée (3) pour alimenter et distribuer de l'eau non nettoyée à l'intérieur dudit tamis rotatif (8) ;
h. une sortie d'eau dudit boîtier (7) ;
i. une sortie de matières solides (4) dudit tamis rotatif (8).

2. Dispositif de tamisage rotatif (1) pour le nettoyage de l'eau selon la revendication 1, dans lequel le palier de tamis rotatif (9) est fabriqué à partir de plastique.

3. Dispositif de tamisage rotatif (1) pour le nettoyage de l'eau selon la revendication 1, dans lequel le palier de tamis rotatif (9) est fabriqué à partir de céramique.

4. Dispositif de tamisage rotatif (1) pour le nettoyage de l'eau selon la revendication 1, dans lequel le palier de tamis rotatif (9) est fabriqué à partir de métal.

5. Dispositif de tamisage rotatif (1) pour le nettoyage de l'eau selon la revendication 4, dans lequel le métal est de l'acier inoxydable.
